(19) Europäisches Patentamt
European Patent Office
Office européen des brevets

(11) **EP 3 334 055 A1**

(12) **EUROPEAN PATENT APPLICATION**
published in accordance with Art. 153(4) EPC

(43) Date of publication:
**13.06.2018 Bulletin 2018/24**

(51) Int Cl.:
***H04B 7/04*** (2017.01)

(21) Application number: **15901943.9**

(22) Date of filing: **24.08.2015**

(86) International application number:
**PCT/CN2015/087948**

(87) International publication number:
**WO 2017/031672 (02.03.2017 Gazette 2017/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventors:
• **LIU, Jianghua
Shenzhen
Guangdong 518129 (CN)**
• **ZHANG, Leiming
Shenzhen
Guangdong 518129 (CN)**

(74) Representative: **Gill Jennings & Every LLP
The Broadgate Tower
20 Primrose Street
London EC2A 2ES (GB)**

(54) **PRECODING INFORMATION SENDING AND FEEDBACK METHOD AND APPARATUS**

(57) This application discloses a precoding information sending solution and a precoding information feedback solution. A base station generates a signaling indicator and sends the signaling indicator to user equipment. The signaling indicator indicates related information about a precoding matrix set determined by the base station from a stored codebook, where the precoding matrix set belongs to a subset of the stored codebook. The user equipment selects a precoding matrix according to the signaling indicator sent by the base station, and sends a precoding matrix indicator PMI to the base station. The precoding matrix is selected according to a precoding matrix set and a feedback is performed. Therefore, complexity of searching for the precoding matrix and precoding feedback bits may be reduced.

```
┌─────────────────────────────────┐
│ Receive a signaling indicator sent by │──── 411
│        a base station            │
└─────────────────────────────────┘
              │
              ▼
┌─────────────────────────────────┐
│   Select a precoding matrix      │──── 412
└─────────────────────────────────┘
              │
              ▼
┌─────────────────────────────────┐
│ Send a precoding matrix indicator │──── 413
│      PMI to the base station     │
└─────────────────────────────────┘
```

FIG. 4

**Description**

**TECHNICAL FIELD**

The present invention relates to the field of communications technologies, and in particular, to a precoding information sending technology and a precoding information feedback technology.

**BACKGROUND**

In a radio communications system, a transmit end (for example, a base station) can learn channel state information (CSI for short) in a manner, and can optimize a to-be-sent signal according to a channel feature, to improve signal receiving quality and improve performance of the entire system.

However, the CSI can often be accurately acquired at a receive end. If the CSI needs to be acquired at the transmit end, related information of the CSI needs to be fed back to the transmit end by using the receive end. For example, in a Long Term Evolution (long term evolution, LTE for short) system, a double-codebook based structure is proposed in an aspect of channel information feedback. For example, user equipment (user equipment, UE for short) feeds back at least two precoding matrix indicators (precoding matrix indicator, PMI for short) to a base station. It is assumed that the at least two precoding matrix indicators are respectively a $PMI_1$ and a $PMI_2$, where the $PMI_1$ corresponds to a codeword $W_1$ in a codebook $C_1$, and the $PMI_2$ corresponds to a codeword $W_2$ in another codebook $C_2$. After receiving the $PMI_1$ and the $PMI_2$, the base station finds the corresponding codewords $W_1$ and $W_2$ from the stored codebooks $C_1$ and $C_2$, and obtains channel information according to a preset function rule $F(W_1, W_2)$.

Because precision of a precoding matrix is related to a size of a codebook, a larger codebook corresponds to a more precise precoding matrix. However, a larger codebook needs more feedback overhead bits. Especially when a quantity of antennas at the transmit end increases, a precise precoding matrix needs a large quantity of feedback bits.

**SUMMARY**

This application provides a precoding information sending method, a precoding information feedback method, and an apparatus, to reduce precoding feedback complexity.

According to an aspect, this application provides a method for sending precoding information, including:

generating, by a base station, a signaling indicator, where the signaling indicator is used to indicate one or more pieces of the following information:

(i) a subset of codewords $W_2$ for a precoding matrix set based on a codebook structure $W=W_1 \cdot W_2$;

(ii) value(s) of a second precoding matrix indicator $i_2$ for a precoding matrix set based on a codebook structure $W=W_1 \cdot W_2$, where each value of $i_2$ is used to indicate a codeword $W_2$;

(iii) a subset of codewords $W_1$ for a precoding matrix set based on a codebook structure $W=W_1 \cdot W_2$;

(iv) value(s) of a first precoding matrix indicator $i_1$ for a precoding matrix set based on a codebook structure $W=W_1 \cdot W_2$, where each value of $i_1$ is used to indicate a codeword $W_1$; and

sending, by the base station, the signaling indicator to user equipment UE.

A base station sends a signaling indicator to UE, so that after the UE learns a precoding matrix set obtained after codebook subset restriction, the UE selects a precoding matrix for the precoding matrix set and feeds back a precoding matrix indicator, so as to reduce precoding feedback complexity.

According to another aspect, this application provides a method for feeding back precoding information, including:

receiving, by user equipment UE, a signaling indicator from a base station, where the signaling indicator is used to indicate one or more pieces of the following information:

(i) a subset of codewords $W_2$ for a precoding matrix set based on a codebook structure $W=W_1 \cdot W_2$;
(ii) value(s) of a second precoding matrix indicator $i_2$ for a precoding matrix set based on a codebook structure $W=W_1 \cdot W_2$, where each value of $i_2$ is used to indicate a codeword $W_2$;

(iii) a subset of codewords $W_1$ for a precoding matrix set based on a codebook structure $W=W_1 \cdot W_2$;

(iv) value(s) of a first precoding matrix indicator $i_1$ for a precoding matrix set based on a codebook structure $W=W_1 \cdot W_2$, where each value of $i_1$ is used to indicate a codeword $W_1$;

selecting, by the UE, a precoding matrix according to the signaling indicator, where the selected precoding matrix belongs to the precoding matrix set; and

sending, by the UE, a precoding matrix indicator PMI to the base station.

A precoding matrix set of a signaling indicator sent by a base station is a codeword subset. Therefore, if UE selects a precoding matrix according to the signaling indicator sent by the base station, complexity of searching for the precoding matrix is reduced, and feedback overheads are also reduced, thereby reducing precoding feedback complexity.

In the foregoing aspects, the subset of the codewords $W_2$ includes one of the following sets: a codeword $W_2$ whose column selection vector value is restricted, a codeword $W_2$ whose phase rotation weighting factor value is restricted, or a codeword $W_2$ whose column selection vector value and phase rotation weighting factor value are both restricted. Because selection of the subset may have multiple choices, the codeword $W_2$ may be flexibly restricted.

In an example, $W_1$ corresponds to a broadband or a long-term channel feature. $W_2$ corresponds to a subband or a short-term channel feature. Instead of directly restricting a codeword of $W=W_1 \cdot W_2$, $W_1$ and $W_2$ are restricted, so as to implement flexible codebook subset restriction on each user or each subband.

In an example, the signaling indicator is codebook subset restriction signaling. Optionally, the signaling indicator is carried in a radio resource control RRC message or downlink control information DCI sent by the base station to the UE. Therefore, the base station does not need to additionally send the signaling indicator.

In an example, the codewords $W_1$ and $W_2$ are codewords in a codebook stored in the base station, or precoding matrices obtained after row or column permutation is performed on a codeword in a codebook stored in the base station.

In an example, the method further includes: receiving, by the base station, a precoding matrix indicator PMI sent by the UE, where a precoding matrix indicated by the PMI belongs to the precoding matrix set. As can be seen, the precoding matrix selected by the UE belongs to the precoding matrix set rather than a universal codebook set. Therefore, the UE may reduce complexity of searching for the precoding matrix.

The PMI sent by the UE to the base station includes a first precoding matrix indicator $PMI_1$ and a second precoding matrix indicator $PMI_2$, where the $PMI_1$ is used to indicate the codeword $W_1$, and the $PMI_2$ is used to indicate the codeword $W_2$; or

the PMI sent by the UE to the base station is a PMI of the precoding matrix selected by the UE; or

the PMI sent by the UE to the base station is a PMI that is obtained after the UE recodes the precoding matrix set and that is for the selected precoding matrix.

The precoding matrix indicators $PMI_1$ and $PMI_2$ have different time domain granularities or different frequency domain granularities.

According to still another aspect, this application further provides a base station, including:

a processor, configured to generate a signaling indicator, where the signaling indicator is used to indicate one or more pieces of the following information:

(i) a subset of codewords $W_2$ for a precoding matrix set based on a codebook structure $W=W_1 \cdot W_2$;

(ii) value(s) of a second precoding matrix indicator $i_2$ for a precoding matrix set based on a codebook structure $W=W_1 \cdot W_2$, where each value of $i_2$ is used to indicate a codeword $W_2$;

(iii) a subset of codewords $W_1$ for a precoding matrix set based on a codebook structure $W=W_1 \cdot W_2$;

(iv) value(s) of a first precoding matrix indicator $i_1$ for a precoding matrix set based on a codebook structure $W=W_1 \cdot W_2$, where each value of $i_1$ is used to indicate a codeword $W_1$; and

a transceiver, configured to send the signaling indicator to user equipment UE.

The base station may be configured to execute the method described in the foregoing aspect. For details, refer to the description of the foregoing aspect.

In a possible design, the base station provided in this application may include a corresponding module configured to execute an action of the base station in the foregoing method design. The module may be software and/or hardware.

According to yet another aspect of this application, user equipment UE is provided, including:

a transceiver, configured to receive a signaling indicator sent by a base station, where the signaling indicator is used to indicate one or more pieces of the following information:

(i) a subset of codewords $W_2$ for a precoding matrix set based on a codebook structure $W=W_1 \cdot W_2$;

(ii) value(s) of a second precoding matrix indicator $i_2$ for a precoding matrix set based on a codebook structure $W=W_1 \cdot W_2$, where each value of $i_2$ is used to indicate a codeword $W_2$;

(iii) a subset of codewords $W_1$ for a precoding matrix set based on a codebook structure $W=W_1 \cdot W_2$;

(iv) value(s) of a first precoding matrix indicator $i_1$ for a precoding matrix set based on a codebook structure $W=W_1 \cdot W_2$, where each value of $i_1$ is used to indicate a codeword $W_1$; and

a processor, configured to select a precoding matrix according to the signaling indicator, where the selected precoding matrix belongs to the precoding matrix set, where
the transceiver is further configured to send a precoding matrix indicator PMI to the base station.

The UE may be configured to execute the method described in the foregoing aspect. For details, refer to the description of the foregoing aspect.

In a possible design, the UE provided in this application may include a corresponding module for executing an action of the UE in the foregoing method. The module may be software and/or hardware.

According to still another aspect, an embodiment of the present invention provides a communications system. The system includes the base station and the UE that are described in the foregoing aspects, or a base station, UE, and a core network.

According to yet another aspect, an embodiment of the present invention provides a computer storage medium, where the computer storage medium includes a program designed to execute the foregoing aspects.

Compared with the prior art, in the solutions provided in this application, a codebook subset is restricted on a base station side. The codebook subset is determined from a codebook as a precoding matrix set, and related information is indicated to UE, so that the UE may learn the codebook subset (that is, the precoding matrix set) determined by the base station, and select a precoding matrix according to the codebook subset, so as to reduce complexity of searching for the precoding matrix. In addition, the UE may flexibly feed back a precoding matrix PMI for the selected precoding matrix, thereby reducing feedback complexity.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a possible system network for implementing the present invention;
FIG. 2 is a logic flowchart showing that a base station provides precoding information to UE;
FIG. 3 is a schematic structural diagram of a base station according to an embodiment of the present invention;
FIG. 4 is a logic flowchart showing that user equipment UE receives precoding information from a base station; and
FIG. 5 is a schematic structural diagram of user equipment UE according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A network architecture and a service scenario that are described in the embodiments of the present invention are intended to describe the technical solutions in the embodiments of the present invention more clearly, and do not constitute any limitation on the technical solutions provided in the embodiments of the present invention. A person of ordinary skill in the art may know that with evolution of network architectures and appearance of new service scenarios, the technical solutions provided in the embodiments of the present invention are also applicable to similar technical issues.

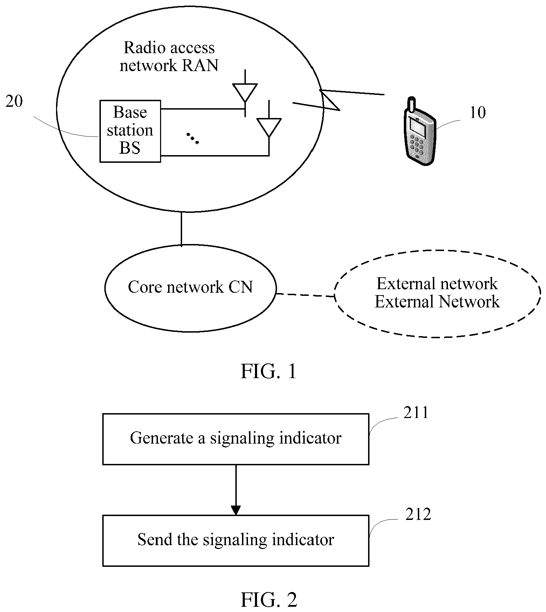

FIG. 1 is a schematic diagram of a possible system network according to the present invention. As shown in FIG. 1, at least one user equipment UE 10 communicates with a radio access network (radio access network, RAN for short). The RAN includes at least one base station 20 (base station, BS for short). Only one base station and one UE are shown in the figure for clarity. The RAN is connected to a core network (core network, CN for short). Optionally, the CN may be coupled to one or more external networks (external network), for example, the Internet, or a public switched telephone network (public switched telephone network, PSTN for short).

To facilitate understanding, some terms involved in this application are described below.

In this application, terms "network" and "system" are often used alternately, but a person skilled in the art may understand meanings of the terms. User equipment (English: User Equipment, UE for short) is a terminal device having a communication function, and may include a handheld device, an in-vehicle device, a wearable device, or a computing device that has a wireless communication function, another processing device connected to a wireless modem, or the like. The user equipment may have different names in different networks, for example, a terminal, a mobile station, a user unit, a station, a cellular phone, a personal digital assistant, a wireless modem, a wireless communications device, a handheld device, a laptop computer, a cordless telephone set, and a wireless local loop station. For convenience of description, the names are briefly referred to as user equipment or UE in this application. The base station (base station, BS for short), also referred to as a base station device, is a device deployed in a radio access network to provide a wireless communication function. The base station may have different names in different wireless access systems. For example, the base station is referred to as a NodeB (NodeB) in a universal mobile telecommunications system (Universal Mobile Telecommunications System, UMTS for short) network, while the base station is referred to as an evolved NodeB (evolved NodeB, eNB or eNodeB for short) in an LTE network.

In a system using a multiple input multiple output (Multiple Input Multiple Output, MIMO for short) technology, channel features differ with different antenna configurations and different application scenarios, and requirements on a codebook are also different. For example, in a three-dimensional multiple input multiple output (3D-MIMO) system, in an urban micro (Urban Micro, UMi for short) scenario, because some users are distributed lower than a height of a base station, and some users are distributed higher than the height of the base station, a vertical distribution feature in precoding for a codebook needs to be considered. However, in an urban macro (Urban Macro, UMa for short) scenario, users are distributed basically lower than a height of a base station. Therefore, a horizontal distributionchannel feature in precoding for a codebook needs to be considered. If a codebook applies for boththe UMi scenario and the UMa scenario, these channel features need to be satisfied by the codebook. Consequently, a codebook set is extremely large, complexity is high, and a feedback amount is relatively large.

Embodiments of the present invention provide a precoding information sending solution and a precoding information feedback solution. The solutions may be applied to the system shown in FIG. 1. When selecting a precoding matrix set, a transmit end (for example, a base station) performs codebook subset restriction (codebook subset restriction, CSR for short), that is, selects a codebook subset from a stored codebook, and indicates the restricted codebook subset (that is, the precoding matrix set) to a receive end (for example, UE) by using a signaling indicator, so as to reduce overheads of higher layer signaling. The receive end selects, according to the signaling indicator sent by the transmit end, a precoding matrix from the codebook subset obtained after codebook subset restriction, and feeds back a corresponding precoding matrix indicator PMI, thereby reducing complexity of searching for the precoding matrix, and reducing feedback overheads.

To facilitate understanding, this application of the present invention is described in detail by using an LTE network defined in the 3rd Generation Partnership Project (English: 3rd Generation Partnership Project, 3GPP for short) as an example. A person skilled in the art may understand that the solutions in the embodiments of the present invention may be applied to another radio communications network, for example, a UMTS network, a network backward compatible with LTE, a 5G network, or a subsequent evolution network.

The base station stores one or more codebooks. For example, the base station may store a codebook $C_1$ representing a broadband or a long-term channel feature, and a codebook $C_2$ representing a subband or a short-term channel feature. The codebook $C_1$ includes at least one codeword $\mathbf{W_1}$ (also referred to as a precoding matrix $W_1$), which corresponds to the broadband or the long-term channel feature. The codebook $C_2$ includes at least one codeword $\mathbf{W_2}$, which corresponds to the subband or the short-term channel feature. For another example, the base station may store a codebook C synthesized based on the codebooks $C_1$ and $C_2$. The codebook C includes a codeword W. The codeword W satisfies $\mathbf{W = W_1 \cdot W_2}$, where the codeword $\mathbf{W_1}$ corresponds to the broadband or the long-term channel feature, and the codeword $\mathbf{W_2}$ corresponds to the subband or the short-term channel feature, that is, the codebook C has a double-codebook structure. It may be understood that the embodiments of the present invention may be based on the double-codebook structure, or may be based on a multiple-codebook structure.

The base station performs codebook subset restriction (codebook subset restriction, CSR for short), to select the precoding matrix set. Codebook subset restriction may be performed by using multiple methods. For example, the base station may restrict a selection range of the codeword $\mathbf{W_2}$ representing the subband or the short-term channel feature (that is, select a subset of an original value range of the codeword $\mathbf{W_2}$), may restrict a selection range of the codeword $\mathbf{W_1}$ representing the broadband or the long-term channel feature (that is, select a subset of an original value range of $\mathbf{W_1}$), or may restrict selection ranges of both $\mathbf{W_1}$ and $\mathbf{W_2}$ (that is, select subsets of original value ranges of $\mathbf{W_1}$ and $\mathbf{W_2}$). The base station provides codebook subset restriction information to the user equipment UE by using the signaling indicator.

The UE receives the signaling indicator from the base station, and learns the codebook subset restriction information, so as to learn the precoding matrix set selected by the base station. The UE also stores one or more codebooks. For example, for a codebook with a same quantity of antennas, the base station and the UE store a same codebook. For example, the base station stores the codebooks $C_1$ and $C_2$ and/or the synthesized codebook C, and the UE also stores the same codebooks $C_1$ and $C_2$ and/or the same synthesized codebook C. For another example, alternatively, the base station may store the synthesized codebook C, and the UE stores the codebooks $C_1$ and $C_2$, and vice versa, that is, the UE stores the synthesized codebook C, and the base station stores the codebooks $C_1$ and $C_2$. The UE receives the signaling indicator sent by the base station, selects the precoding matrix from the stored codebook according to the signaling indicator, and returns a selected precoding matrix indicator PMI to the base station. Therefore, feedback overheads are reduced and complexity of searching for the precoding matrix by a user is reduced.

The following further describes how the base station performs codebook subset restriction.

An example in which the selection range of the codeword $\mathbf{W_2}$ is restricted (that is, codebook subset restriction is performed on the codeword $\mathbf{W_2}$) is used for detailed description. The codeword $\mathbf{W_2}$ is a codeword representing the subband or the short-term channel feature. Therefore, if the codeword $\mathbf{W_2}$ is restricted, codebook subset restriction may be flexibly performed on each user or each subband.

In a design, the base station may restrict a column selection vector value of the codeword $\mathbf{W_2}$. Because spatial correlations of channels between subbands are relatively consistent (do not change much) in some scenarios, each subband does not need to perform selection in M (M is a positive integer) Discrete Fourier Transform (Discrete Fourier Transform, DFT for short) vectors provided in the codeword $\mathbf{W_1}$, and needs to perform selection in K ($K < M$) DFT vectors in the M Discrete Fourier Transform vectors. Therefore, the selection range of the codeword $\mathbf{W_2}$ may be restricted.

In another design, the base station may restrict a phase rotation weighting factor value of the codeword $\mathbf{W_2}$, to restrict the selection range of the codeword $\mathbf{W_2}$.

In still another design, the base station restricts both a column vector value and a phase rotation weighting factor value of the codeword $\mathbf{W_2}$, so as to restrict the selection range of the codeword $\mathbf{W_2}$.

The codeword $\mathbf{W_2}$ indicates the subband or the short-term channel feature. Therefore, restriction on a particular user and/or restriction on a particular subband may be implemented. That is, for different users and/or different subband widths, ranges (or values) of codebook subset restriction may be different, so as to implement a feature of flexible restriction. The base station may indicate the codebook subset restriction information to the UE. The UE performs a precoding feedback on a codebook obtained after codebook subset restriction. Feedback overheads can be greatly reduced, thereby reducing precoding search complexity.

Using an 8-antenna LTE system as an example, a description for different codebook structures is further given below. It may be understood that the solutions provided in the embodiments of the present invention are also applicable to a system with multiple antennas, for example, a 16-antenna system or a 32-antenna system.

In an 8-antenna LTE system scenario, $\mathbf{W} = \mathbf{W_1} \cdot \mathbf{W_2}$, where $\mathbf{W}_1 = \begin{bmatrix} \mathbf{X}_l & 0 \\ 0 & \mathbf{X}_l' \end{bmatrix}$, $l = 0, 1, .., N\text{-}1$, $\mathbf{X}_l = [\mathbf{b}_1, \mathbf{b}_2, L, \mathbf{b}_M]$,

$\mathbf{X}_l' = [\mathbf{b'}_1, \mathbf{b'}_2, L, \mathbf{b'}_M]$, $\mathbf{b}_m$ is a DFT vector, $\mathbf{x}_l$ includes M DFT vectors, and M is a positive integer.

For example, when M=4, $\mathbf{x}_l$ includes four DFT beams, and

$$\mathbf{X}_l = \begin{bmatrix} \mathbf{b}_1, \mathbf{b}_2, \mathbf{b}_3, \mathbf{b}_4 \end{bmatrix} = \begin{bmatrix} 1 & 1 & 1 & 1 \\ e^{j2\pi\frac{2l}{M}} & e^{j2\pi\frac{2l+1}{M}} & e^{j2\pi\frac{2l+2}{M}} & e^{j2\pi\frac{2l+3}{M}} \\ e^{j2\pi\frac{4l}{M}} & e^{j2\pi\frac{2(2l+1)}{M}} & e^{j2\pi\frac{2(2l+2)}{M}} & e^{j2\pi\frac{2(2l+3)}{M}} \\ e^{j2\pi\frac{6l}{M}} & e^{j2\pi\frac{3(2l+1)}{M}} & e^{j2\pi\frac{3(2l+2)}{M}} & e^{j2\pi\frac{3(2l+3)}{M}} \end{bmatrix}.$$

For another example, when M=32, $\mathbf{x'}_l$ and $\mathbf{x}_l$ may be the same or may be different. For example,

$$\mathbf{X}_l^{'} = \left[ \mathbf{b}_1^{'}, \mathbf{b}_2^{'}, \mathrm{L}, \mathbf{b}_M^{'} \right] = \begin{bmatrix} 1 & & & \\ & e^{j2\pi\frac{m_1}{N}} & & \\ & & e^{j2\pi\frac{m_2}{N}} & \\ & & & e^{j2\pi\frac{m_3}{N}} \end{bmatrix} \begin{bmatrix} 1 & 1 & 1 & 1 \\ e^{j2\pi\frac{2l}{M}} & e^{j2\pi\frac{2l+1}{M}} & e^{j2\pi\frac{2l+2}{M}} & e^{j2\pi\frac{2l+3}{M}} \\ e^{j2\pi\frac{4l}{M}} & e^{j2\pi\frac{2(2l+1)}{M}} & e^{j2\pi\frac{2(2l+2)}{M}} & e^{j2\pi\frac{2(2l+3)}{M}} \\ e^{j2\pi\frac{6l}{M}} & e^{j2\pi\frac{3(2l+1)}{M}} & e^{j2\pi\frac{3(2l+2)}{M}} & e^{j2\pi\frac{3(2l+3)}{M}} \end{bmatrix},$$

where m1, m2, and m3 represent real numbers, and N is a positive integer, for example, N=32 or 16.

Optionally, $\mathbf{x}'_l$ and $\mathbf{x}_l$ in $\mathbf{W}_1 = \begin{bmatrix} \mathbf{X}_l & 0 \\ 0 & \mathbf{X}_l^{'} \end{bmatrix}$, $l = 0,1..,N\text{-}1$ may satisfy: $\mathbf{x}_l = \mathbf{x}_1 \otimes \mathbf{x}_2$ and $\mathbf{x}'_l = \mathbf{x}'_1 \otimes \mathbf{x}'_2$, where

$\otimes$ represents a Kronecker (Kronecker) operator, and $\mathbf{x}_1$, $\mathbf{x}_2$, $\mathbf{x}'_1$ and $\mathbf{x}'_2$ represent matrices. For example, $\mathbf{x}_1$ and $\mathbf{x}'_1$ respectively represent matrices formed by vectors corresponding to a channel horizontal dimension and a channel vertical dimension. $\mathbf{x}_2$ and $\mathbf{x}'_2$ respectively represent matrices formed by vectors corresponding to a channel vertical dimension and a channel horizontal dimension. For example,

$$\mathbf{X}_1 = \mathbf{X}_1^{'} = \begin{bmatrix} 1 & 1 & 1 & 1 \\ e^{j2\pi\frac{l}{32}} & e^{j2\pi\frac{l+k_1}{32}} & e^{j2\pi\frac{l+k_2}{32}} & e^{j2\pi\frac{l+k_3}{32}} \\ e^{j2\pi\frac{2l}{32}} & e^{j2\pi\frac{2(l+k_1)}{32}} & e^{j2\pi\frac{2(l+k_2)}{32}} & e^{j2\pi\frac{2(l+k_3)}{32}} \\ e^{j2\pi\frac{3l}{32}} & e^{j2\pi\frac{3(l+k_1)}{32}} & e^{j2\pi\frac{2(l+k_2)}{32}} & e^{j2\pi\frac{2(l+k_3)}{32}} \end{bmatrix}$$

and

$$\mathbf{X}_2 = \mathbf{X}_2^{'} = \begin{bmatrix} 1 & 1 \\ e^{j2\pi\frac{l}{32}} & e^{j2\pi\frac{l+k}{32}} \end{bmatrix}.$$

When a rank is 1, $\mathbf{W}_2$ may be expressed as $\mathbf{W}_2 = a \begin{bmatrix} \mathbf{Y}_1 \\ \varphi_n \mathbf{Y}_2 \end{bmatrix}$ where a is a constant, and $\varphi_n = e^{j\xi}$ a phase rotation weighting factor (co-phasing), which represents a weighted value on a different polarization antenna. For example, $\varphi_n = e^{j\xi} = e^{j\frac{2n\pi}{4}}, n = \{0,1,2,3\}$. Generally, if a correlation between different polarizations is relatively weak, phase differences $\xi$ corresponding to corresponding phase weighted values $\varphi_n$ differ a lot, for example, $\xi=\pi$, that is, when n=1 or 3. If a correlation between different antenna polarizations is relatively strong, phase differences $\xi$ corresponding to corresponding phase weighted values $\varphi_n$ differ little, for example, $\xi = \frac{1}{4} 2\pi$ that is, when n=1 or 2. $\mathbf{Y}_1$ and $\mathbf{Y}_2$ represent $(M \times 1)$-dimensional column selection vectors, aiming to select a column (or a DFT vector) in $\mathbf{W}_1$.

In an example, $\{\mathbf{Y}_1, \mathbf{Y}_2\} \in \left\{ \begin{bmatrix} 1 \\ 0 \\ M \\ 0 \end{bmatrix}_{M \times 1}, \begin{bmatrix} 0 \\ 1 \\ M \\ 0 \end{bmatrix}_{M \times 1}, L, \begin{bmatrix} 0 \\ 0 \\ M \\ 1 \end{bmatrix}_{M \times 1} \right\}$, where $Y_1$ and $Y_2$ may be the same or may be different. When codebook subset restriction is performed on $\mathbf{W_2}$, value ranges of the column selection vectors $Y_1$ and $Y_2$ may be restricted to being any subset of an original value range. For example, it is set that

$\{\mathbf{Y}_1, \mathbf{Y}_2\} \in \left\{ \begin{bmatrix} 1 \\ 0 \\ M \\ 0 \end{bmatrix}_{M \times 1}, \begin{bmatrix} 0 \\ 1 \\ M \\ 0 \end{bmatrix}_{M \times 1} \right\}$ or $\{\mathbf{Y}_1, \mathbf{Y}_2\} \in \left\{ \begin{bmatrix} 1 \\ 0 \\ M \\ 0 \end{bmatrix}_{M \times 1}, \begin{bmatrix} 0 \\ 0 \\ M \\ 1 \end{bmatrix}_{M \times 1} \right\}$ That is, $\mathbf{W_2}$ is restricted to being selected from the first two column vectors in $W_1$ or the first column vector and the last column vector in $W_1$. For another example, $\mathbf{W_2}$ may be selected from the first column vector and the third column vector in $W_1$. Optionally, when codebook subset restriction is performed on $\mathbf{W_2}$, the phase rotation weighting factor (co-phasing) $\varphi_n = e^{j\frac{2n\pi}{4}}, n = \{0,1\}$ or $n = \{0,2\}$

may be restricted. That is, a range from which the phase rotation weighting factor (co-phasing) $\varphi_n$ may be selected is restricted to being any subset of an original value range. For example, it is set that $\varphi_n \in \{1,j\}$ or $\varphi_n \in \{1,-1\}$. Certainly, it may be understood that the selection range of the column selection vector and the selection range of the phase rotation weighting factor may be both restricted, that is, the value range of the column selection vector and the value range of the phase weighting factor are both restricted to being subsets of original value ranges of the column selection vector and the phase weighting factor.

In another example, $\mathbf{Y_1}$ and $\mathbf{Y_2}$ may be expressed as $\mathbf{Y}_1 = \mathbf{y}_{11} \otimes \mathbf{y}_{12} = \mathbf{y}_{21} \otimes \mathbf{y}_{22}$, where $\mathbf{y}_{11}, \mathbf{y}_{12}, \mathbf{y}_{21},$ and $\mathbf{y}_{22}$ represent

column selection vectors. For example, at least one of $y_{11}, y_{12}, y_{21}$ or $y_{22}$ belongs to $\left\{ \begin{bmatrix} 1 \\ 0 \\ 0 \\ 0 \end{bmatrix}, \begin{bmatrix} 0 \\ 1 \\ 0 \\ 0 \end{bmatrix}, \begin{bmatrix} 0 \\ 0 \\ 1 \\ 0 \end{bmatrix}, \begin{bmatrix} 0 \\ 0 \\ 0 \\ 1 \end{bmatrix} \right\}$ or

at least one of $y_{11}, y_{12}, y_{21}$ or $y_{22}$ belongs to $\left\{ \begin{bmatrix} 1 \\ 0 \end{bmatrix}, \begin{bmatrix} 0 \\ 1 \end{bmatrix} \right\}$ When codebook subset restriction is performed on $W_2$,

values of $\mathbf{y}_{11}, \mathbf{y}_{12}, \mathbf{y}_{21}$ and $\mathbf{y}_{22}$ may be separately restricted, that is, a value range thereof is restricted to being a subset of an original value range, or a value of a combination of $\mathbf{y}_{11}, \mathbf{y}_{12}, \mathbf{y}_{21},$ and $\mathbf{y}_{22}$ may be restricted, that is, the value is restricted to being a subset of a value range of an original combination.

When the rank is 2, $\mathbf{W}_2 = b \begin{bmatrix} \mathbf{Y}_1 & \mathbf{Y}_2 \\ \varphi_n \mathbf{Y}_1 & -\varphi_n \mathbf{Y}_2 \end{bmatrix}$ or $\mathbf{W}_2 = b \begin{bmatrix} \mathbf{Y}_1 & \mathbf{Y}_1 \\ \varphi_n \mathbf{Y}_2 & -\varphi_n \mathbf{Y}_2 \end{bmatrix}$, where b is a constant,

and $\varphi_n = e^{j\xi}$ is a phase rotation weighting factor (co-phasing). For example, $\varphi_n = e^{j\xi}, \xi \in \left\{ 0, \frac{2\pi}{4}, \frac{4\pi}{4}, \frac{6\pi}{4} \right\}$ $\mathbf{Y}_1$ and

$\mathbf{Y}_2$ represent $(M \times 1)$-dimensional column selection vectors, for example,

$$\{\mathbf{Y}_1, \mathbf{Y}_2\} \in \left\{ \begin{bmatrix} 1 \\ 0 \\ \mathbf{M} \\ 0 \end{bmatrix}_{M \times 1}, \begin{bmatrix} 0 \\ 1 \\ \mathbf{M} \\ 0 \end{bmatrix}_{M \times 1}, \mathbf{L}, \begin{bmatrix} 0 \\ 0 \\ \mathbf{M} \\ 1 \end{bmatrix}_{M \times 1} \right\}$$

When codebook subset restriction is performed on $\mathbf{W}_2$, values of $\mathbf{Y}_1$, and $\mathbf{Y}_2$ may be restricted to being subsets of the original value ranges. For example, it is set that

$$\{\mathbf{Y}_1, \mathbf{Y}_2\} = \left\{ \begin{bmatrix} 1 \\ 0 \\ \mathbf{M} \\ 0 \end{bmatrix}_{M \times 1}, \begin{bmatrix} 1 \\ 0 \\ \mathbf{M} \\ 0 \end{bmatrix}_{M \times 1} \right\} \text{ or } \{\mathbf{Y}_1, \mathbf{Y}_2\} = \left\{ \begin{bmatrix} 1 \\ 0 \\ \mathbf{M} \\ 0 \end{bmatrix}_{M \times 1}, \begin{bmatrix} 0 \\ 0 \\ \mathbf{M} \\ 1 \end{bmatrix}_{M \times 1} \right\}$$

Optionally, $\mathbf{Y}_1$ and $\mathbf{Y}_2$ may be expressed as $\mathbf{Y}_1 = \mathbf{y}_{11} \otimes \mathbf{y}_{12}$, $\mathbf{Y}_2 = \mathbf{y}_{21} \otimes \mathbf{y}_{22}$, where $\mathbf{y}_{11}, \mathbf{y}_{12}, \mathbf{y}_{21}$ and $\mathbf{y}_{22}$ represent column selection vectors. For example, at least one of $\mathbf{y}_{11}, \mathbf{y}_{12}, \mathbf{y}_{21}$ or $\mathbf{y}_{22}$ belongs to $\left\{ \begin{bmatrix} 1 \\ 0 \\ 0 \\ 0 \end{bmatrix}, \begin{bmatrix} 0 \\ 1 \\ 0 \\ 0 \end{bmatrix}, \begin{bmatrix} 0 \\ 0 \\ 1 \\ 0 \end{bmatrix}, \begin{bmatrix} 0 \\ 0 \\ 0 \\ 1 \end{bmatrix} \right\}$ or, at least one of $\mathbf{y}_{11}, \mathbf{y}_{12}, \mathbf{y}_{21}$ or $\mathbf{y}_{22}$ belongs to $\left\{ \begin{bmatrix} 1 \\ 0 \end{bmatrix}, \begin{bmatrix} 0 \\ 1 \end{bmatrix} \right\}$ When codebook subset restriction is performed on $W_2$, values of $\mathbf{y}_{11}, \mathbf{y}_{12}, \mathbf{y}_{21}$ and $\mathbf{y}_{22}$ may be separately restricted, that is, a value range thereof is restricted to being a subset of an original value range, or a value of a combination of $\mathbf{y}_{11}, \mathbf{y}_{12}, \mathbf{y}_{21}$ and $\mathbf{y}_{22}$ may be restricted, that is, the value is restricted to being a subset of a value range of an original combination.

When the rank is 3, $\mathbf{W}_2 = b \begin{bmatrix} \mathbf{Y}_1 & \mathbf{Y}_2 \\ \varphi_n \mathbf{Y}_1 & -\varphi_n \mathbf{Y}_2 \end{bmatrix}$ or $\mathbf{W}_2 = b \begin{bmatrix} \mathbf{Y}_1 & \mathbf{Y}_1 \\ \varphi_n \mathbf{Y}_2 & -\varphi_n \mathbf{Y}_2 \end{bmatrix}$, where b is a constant, and $\varphi_n = e^{j\xi}$ is a phase rotation weighting factor (co-phasing). For example, $\varphi_n = e^{j\xi}$, $\xi \in \left\{ 0, \frac{2\pi}{4}, \frac{4\pi}{4}, \frac{6\pi}{4} \right\}$ $\mathbf{Y}_1$ and $\mathbf{Y}_2$ represent ($M \times 1$)-dimensional column selection matrices, for example, $\mathbf{Y}_1 \in \left\{ \begin{bmatrix} 1 \\ 0 \\ \mathbf{M} \\ 0 \end{bmatrix}_{M \times 1}, \begin{bmatrix} 0 \\ 1 \\ \mathbf{M} \\ 0 \end{bmatrix}_{M \times 1}, \mathbf{L}, \begin{bmatrix} 0 \\ 0 \\ \mathbf{M} \\ 1 \end{bmatrix}_{M \times 1} \right\}$

and $\mathbf{Y}_2 \in \left\{ \begin{bmatrix} 1 & 0 \\ 0 & 1 \\ \mathbf{M} & \mathbf{M} \\ 0 & 0 \end{bmatrix}_{M \times 1}, \mathbf{L}, \begin{bmatrix} 1 & 0 \\ 0 & 0 \\ \mathbf{M} & \mathbf{M} \\ 0 & 1 \end{bmatrix}_{M \times 1} \right\}$ When codebook subset restriction is performed on the codeword $\mathbf{W}_2$, similar to the case in which the rank is 2, values of the column selection vectors $\mathbf{Y}_1$ and $\mathbf{Y}_2$ may be restricted to being any subsets of the foregoing values. For example, $\mathbf{W}_2$ may be restricted to being selected from a selection combination such as the first two column vectors in $W_1$, the first column vector and the last column vector in $W_1$, or the first column vector and the third column vector in $W_1$. Optionally, when codebook subset restriction is performed on $\mathbf{W}_2$, the phase rotation weighting factor (co-phasing) $\varphi_n = e^{j\frac{2n\pi}{4}}$, $n=\{0,1\}$ or $n=\{0,2\}$ may be restricted. That is, the selected phase rotation weighting factor (co-phasing) $\varphi_n$ is restricted to being a subset of the original value. Certainly, it may be understood that the foregoing restriction or restriction of another combination may be performed on both the selection range of the column selection vector and the selection range of the phase rotation weighting factor.

Optionally, $\mathbf{Y}_1$ and $\mathbf{Y}_2$ may be expressed as $\mathbf{Y}_1 = \mathbf{y}_{11} \otimes \mathbf{y}_{12}, \mathbf{Y}_2 = \mathbf{y}_{21} \otimes \mathbf{y}_{22}$, where $\mathbf{y}_{11}, \mathbf{y}_{12}, \mathbf{y}_{21}$ and $\mathbf{y}_{22}$ represent column selection vectors. For example, $\mathbf{y}_{11}$ belongs to $\left\{ \begin{bmatrix} 1 \\ 0 \\ 0 \\ 0 \end{bmatrix} \begin{bmatrix} 0 \\ 1 \\ 0 \\ 0 \end{bmatrix} \begin{bmatrix} 0 \\ 0 \\ 1 \\ 0 \end{bmatrix} \begin{bmatrix} 0 \\ 0 \\ 0 \\ 1 \end{bmatrix} \right\}$ or $\mathbf{y}_{12}$ belongs to

$\left\{ \begin{bmatrix} 1 \\ 0 \end{bmatrix} \begin{bmatrix} 0 \\ 1 \end{bmatrix} \right\}$, and $\mathbf{y}_{21}$ belongs to $\mathbf{Y}_2 \in \left\{ \begin{bmatrix} 1 & 0 \\ 0 & 1 \\ M & M \\ 0 & 0 \end{bmatrix}_{M \times 1} , L , \begin{bmatrix} 1 & 0 \\ 0 & 0 \\ M & M \\ 0 & 1 \end{bmatrix}_{M \times 1} \right\}$ or $\mathbf{y}_{22}$ belongs to $\left\{ \begin{bmatrix} 1 \\ 0 \end{bmatrix} \begin{bmatrix} 0 \\ 1 \end{bmatrix} \right\}$. Sim-

ilar to the case in which the rank is 2, when codebook subset restriction is performed on $W_2$, values of $\mathbf{y}_{11}, \mathbf{y}_{12}, \mathbf{y}_{21}$ and $\mathbf{y}_{22}$ may be separately restricted, that is, a value range thereof is restricted to being a subset of an original value range, or a value of a combination of $\mathbf{y}_{11}, \mathbf{y}_{12}, \mathbf{y}_{21}$ and $\mathbf{y}_{22}$ may be restricted, that is, the value is restricted to being a subset of a value range of an original combination.

When the rank is 4, $\mathbf{W_2} = b \begin{bmatrix} \mathbf{Y}_1 & \mathbf{Y}_2 \\ \varphi_n \mathbf{Y}_1 & -\varphi_n \mathbf{Y}_2 \end{bmatrix}$ or $\mathbf{W_2} = b \begin{bmatrix} \mathbf{Y}_1 & \mathbf{Y}_1 \\ \varphi_n \mathbf{Y}_2 & -\varphi_n \mathbf{Y}_2 \end{bmatrix}$, where b is a constant, and

$\varphi_n = e^{j\xi}$ is a phase rotation weighting factor (co-phasing). For example, $\varphi_{n=}e^{j\xi}$, $\xi \in \left\{ 0, \dfrac{2\pi}{4}, \dfrac{4\pi}{4}, \dfrac{6\pi}{4} \right\}$. $\mathbf{Y}_1$ and $\mathbf{Y}_2$

represent ($M \times 1$)-dimensional column selection matrices, for example, $\mathbf{Y}_1 \in \left\{ \begin{bmatrix} 1 & 0 \\ 0 & 1 \\ M & M \\ 0 & 0 \end{bmatrix}_{M \times 1} , L , \begin{bmatrix} 1 & 0 \\ 0 & 0 \\ M & M \\ 0 & 1 \end{bmatrix}_{M \times 1} \right\}$ and

$\mathbf{Y}_2 \in \left\{ \begin{bmatrix} 1 & 0 \\ 0 & 1 \\ M & M \\ 0 & 0 \end{bmatrix}_{M \times 1} , L , \begin{bmatrix} 1 & 0 \\ 0 & 0 \\ M & M \\ 0 & 1 \end{bmatrix}_{M \times 1} \right\}$. When codebook subset restriction is performed on $\mathbf{W}_2$, similar to the case in which the rank is 2, values of the column selection vectors $Y_1$ and $Y_2$ may be restricted to being any subsets of the foregoing values. For example, $\mathbf{W}_2$ may be restricted to being selected from a selection combination such as the first two column vectors in $W_1$, the first column vector and the last column vector in $W_1$, or the first column vector and the third column vector in $W_1$. Optionally, when codebook subset restriction is performed on $\mathbf{W}_2$, the phase rotation weighting

factor (co-phasing) $\varphi_n = e^{j\frac{2n\pi}{4}}$, $n=\{0,1\}$ or $n=\{0,2\}$ may be restricted. That is, the selected phase rotation weighting factor (co-phasing) $\varphi_n$ is restricted to being a subset of the original value. Certainly, it may be understood that the foregoing restriction or restriction of another combination may be performed on both the selection range of the column selection vector and the selection range of the phase rotation weighting factor.

Optionally, $Y_1$ and $Y_2$ may be expressed as $Y_1=y_{11}\otimes y_{12}, Y_2=y_{21}\otimes y_{22}$, where $y_{11}, y_{12}, y_{21}$ and $y_{22}$ represent column selection vectors. For example, $y_{11}$ belongs to $\left\{ \begin{bmatrix} 1 & 0 \\ 0 & 1 \\ M & M \\ 0 & 0 \end{bmatrix}_{M\times 1}, L, \begin{bmatrix} 1 & 0 \\ 0 & 0 \\ M & M \\ 0 & 1 \end{bmatrix}_{M\times 1} \right\}$ or $y_{12}$ belongs to

$\left\{ \begin{bmatrix} 1 \\ 0 \end{bmatrix}, \begin{bmatrix} 0 \\ 1 \end{bmatrix} \right\}$, and $y_{21}$ belongs to $\left\{ \begin{bmatrix} 1 & 0 \\ 0 & 1 \\ M & M \\ 0 & 0 \end{bmatrix}_{M\times 1}, L, \begin{bmatrix} 1 & 0 \\ 0 & 0 \\ M & M \\ 0 & 1 \end{bmatrix}_{M\times 1} \right\}$ or $y_{22}$ belongs to $\left\{ \begin{bmatrix} 1 \\ 0 \end{bmatrix}, \begin{bmatrix} 0 \\ 1 \end{bmatrix} \right\}$. Similar to

the case in which the rank is 2, when codebook subset restriction is performed on $W_2$, values of $y_{11}, y_{12}, y_{21}$ and $y_{22}$ may be separately restricted, that is, a value range thereof is restricted to being a subset of an original value range, or a value of a combination of $y_{11}, y_{12}, y_{21}$ and $y_{22}$ may be restricted, that is, the value is restricted to being a subset of a value range of an original combination.

In the foregoing example, codebook subset restriction is implemented by restricting the selection range of $W_2$. For example, the value ranges of the column selection vectors $Y_1$, and $Y_2$ in $W_2$, and/or the value range of the phase rotation factor $\varphi_n = e^{j\xi}$ may be restricted, and the value range thereof is restricted to being a subset of the original value range, that is, some values in a universal set are selected. Therefore, restriction on a particular user and/or a particular subband is implemented. That is, ranges (or values) of codebook subset restriction are different for each user and/or different subband widths, so that codebook subset restriction is more flexible. Codebook restriction may be performed according to different environments or different channel conditions of a user, and feedback overheads are reduced by means of codebook re-coding feedback.

It may be understood that the selection range of $W_1$ may be restricted by referring to a similar principle of the foregoing restricting the selection range of $W_2$. A codebook subset of $W_1$ is selected, or the selection ranges of $W_1$ and $W_2$ are both restricted, and a subset of the original value range thereof is selected.

FIG. 2 is a logic flowchart showing that a base station provides precoding information to UE.

At 211, the base station 20 generates a signaling indicator.

Specifically, the base station determines a codebook subset (that is, a precoding matrix set) from a stored codebook, and generates the signaling indicator according to the determined codebook subset. That is, the base station generates the signaling indicator according to a situation of performing codebook subset restriction on the stored codebook.

A double-codebook structure $W=W_1 \cdot W_2$ in an LTE system is still used as an example for description. For details, refer to the related description in the foregoing embodiment. The codeword $W_1$ corresponds to a broadband or a long-term channel feature, and the codeword $W_2$ corresponds to a subband or a short-term channel feature. For the precoding matrix set selected by the base station, codebook subset restriction may be performed on $W_1$ and/or $W_2$ by referring to the codebook subset restriction method in the foregoing embodiment, and details are not described herein. For example, for $W_2$, a value of a column selection vector is restricted, or a value of a phase rotation weighting factor is restricted, or both a value of a column vector and a value of a phase rotation weighting factor are restricted. For details, refer to the description in the foregoing embodiment.

At 212, the base station 20 sends the signaling indicator to the UE 10. The signaling indicator is used to instruct the base station to select the codebook subset, that is, the precoding matrix set.

In an example, the base station 20 may indicate a subset of $W_2$ corresponding to the precoding matrix set by using a codebook subset restriction (codebook subset restriction) instruction. For the subset, a value of a column selection vector may be restricted for $W_2$; for the subset, a value of a phase rotation weighting factor may be restricted for $W_2$; or for the subset, both a value of a column selection vector and a value of a phase rotation weighting factor may be restricted

for $\mathbf{W}_2$. For a related description about the subset of $\mathbf{W}_2$, refer to the description in the foregoing codebook subset restriction method, and details are not described herein.

In another example, the base station 20 may indicate a value of a second precoding matrix indicator $i_2$ of the precoding matrix set by using the codebook subset restriction instruction, where $i_2$ is used to indicate $\mathbf{W}_2$.

For example, when a rank is 1, it is stipulated in the LTE standard that a correspondence between $i_2$ and a precoding matrix may be expressed as follows:

| $i_1$ | $i_2$ | | | | | | | |
|---|---|---|---|---|---|---|---|---|
| | 0 | 1 | 2 | 3 | 4 | 5 | 6 | 7 |
| 0-15 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |

| $i_1$ | $i_2$ | | | | | | | |
|---|---|---|---|---|---|---|---|---|
| | 8 | 9 | 10 | 11 | 12 | 13 | 14 | 15 |
| 0-15 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |

| where | $W_{m,n}^{(1)} = \dfrac{1}{\sqrt{8}}\begin{bmatrix} v_m \\ \varphi_n v_m \end{bmatrix}$ |
|---|---|

$\varphi_n = e^{j\pi n/2}$

where $v_m = [1\ e^{j2\pi n/32}\ e^{j4\pi n/32}\ e^{j6\pi n/32}]^\mathrm{T}$, $i_1$ has 16 choices, representing 16 $W_1$, and $i_2$ also has 16 choices, representing 16 $W_2$.

$i_2$ may be divided into 4 groups. A value of the first $i_2$ group is {0, 1, 2, 3}, a value of the second $i_2$ group is {4, 5, 6, 7}, a value of the third $i_2$ group is {8, 9, 10, 11}, and a value of the fourth $i_2$ group is {12, 13, 14, 15}. Precoding vectors in a same group correspond to a same column vector, but polarization weighting coefficients (co-phasing) are: $\varphi_n \in \{1, j, -1, -j\}$.

When a value range of $i_2$ is restricted to being {0, 1, 2, 3, 12, 13, 14, 15} by means of codebook subset restriction based on $i_2$ restriction, the precoding matrix is restricted to being in the first group and the fourth group. A column vector of the corresponding $W_2$ is selected from vectors in the first column and the fourth column in $W_1$.

For another example, when the value range of $i_2$ is restricted to being {0, 2, 4, 6, 8, 10, 12, 14} by means of codebook subset restriction based on $i_2$ restriction, the precoding matrix is restricted to being in the first and the third precoding matrices of each group. The column vector of the corresponding $W_2$ is selected from each column vector in $W_1$, but correspondingly, $\varphi_n \in \{1, -1\}$.

When the rank is 2, it is stipulated in the LTE standard that a correspondence between $i_2$ and a precoding matrix may be expressed as follows:

| $i_1$ | $i_2$ | | | |
|---|---|---|---|---|
| | 0 | 1 | 2 | 3 |
| 0-15 | $W_{2i_1,2i_1,0}^{(2)}$ | $W_{2i_1,2i_1,1}^{(2)}$ | $W_{2i_1+1,2i_1+1,0}^{(2)}$ | $W_{2i_1+1,2i_1+1,1}^{(2)}$ |

| $i_1$ | $i_2$ | | | |
|---|---|---|---|---|
| | 4 | 5 | 6 | 7 |
| 0-15 | $W_{2i_1+2,2i_1+2,0}^{(2)}$ | $W_{2i_1+2,2i_1+2,1}^{(2)}$ | $W_{2i_1+3,2i_1+3,0}^{(2)}$ | $W_{2i_1+3,2i_1+3,1}^{(2)}$ |

(continued)

| $i_1$ | $i_2$ | | | |
|---|---|---|---|---|
| | 8 | 9 | 10 | 11 |
| 0-15 | $W^{(2)}_{2i_1,2i_1+1,0}$ | $W^{(2)}_{2i_1,2i_1+1,1}$ | $W^{(2)}_{2i_1+1,2i_1+2,0}$ | $W^{(2)}_{2i_1+1,2i_1+2,1}$ |
| $i_1$ | $i_2$ | | | |
| | 12 | 13 | 14 | 15 |
| 0-15 | $W^{(2)}_{2i_1,2i_1+3,0}$ | $W^{(2)}_{2i_1,2i_1+3,1}$ | $W^{(2)}_{2i_1+1,2i_1+3,0}$ | $W^{(2)}_{2i_1+1,2i_1+3,1}$ |
| where | $W^{(2)}_{m,m',n} = \dfrac{1}{4}\begin{bmatrix} v_m & v_{m'} \\ \varphi_n v_m & -\varphi_n v_{m'} \end{bmatrix}$ | | | |

$\varphi_n = e^{j\pi n/2}$

where $v_m = [1\ e^{j2\pi n/32}\ e^{j4\pi n/32}\ e^{j6\pi n/32}]^T$, $i_1$ has 16 choices, representing 16 $W_1$, and $i_2$ also has 16 choices, representing 16 $W_2$.

$i_2$ may be divided into eight groups. A value of the first $i_2$ group is {0, 1}, a value of the second $i_2$ group is {2, 3}, a value of the third $i_2$ group is {4, 5}, a value of the fourth $i_2$ group is {6, 7}, a value of the fifth $i_2$ group is {8, 9}, a value of the sixth $i_2$ group is {10, 11}, a value of the seventh $i_2$ group is {12, 13}, and a value of the eighth $i_2$ group is {14, 15}. The first to the eighth groups each correspond to a column vector combination.

For example, in the first group $W_2$, two selected column vectors correspond to the first column vector in $W_1$; in the second group $W_2$, two selected column vectors correspond to the second column vector in $W_1$; in the third group $W_2$, two selected column vectors correspond to the third column vector in $W_1$; in the fourth group $W_2$, two selected column vectors correspond to the fourth column vector in $W_1$; in the fifth group $W_2$, two selected column vectors respectively correspond to the first column vector and the second column vector in $W_1$; in the sixth group $W_2$, two selected column vectors respectively correspond to the second column vector and the third column vector in $W_1$; in the seventh group $W_2$, two selected column vectors respectively correspond to the first column vector and the fourth column vector in $W_1$; and in the eighth group $W_2$, two selected column vectors respectively correspond to the second column vector and the fourth column vector in $W_1$.

Two precoding vectors in each group correspond to a same column vector choice, but polarization weighting vectors are different, and $\varphi_n \in \{1,-1\}$.

When the value range of $i_2$ is restricted to being {0, 1, 2, 3, 4, 5, 6, 7} by means of codebook subset restriction based on $i_2$ restriction, the value of the precoding matrix set is restricted to being in a combination of the first four groups.

For another example, when the value range of $i_2$ is restricted to being {0, 2, 4, 6, 8, 10, 12, 14} by means of codebook subset restriction based on $i_2$ restriction, the precoding matrix is restricted to being in the first and the second precoding matrices of each group. The column vector of the corresponding $W_2$ is selected from each column vector in $W_1$, but correspondingly, $\varphi_n=1$.

In still another example, the base station 20 indicates a subset of **$W_1$** corresponding to the precoding matrix set or a value of a first precoding matrix indicator $i_1$ of the precoding matrix set by using a codebook subset restriction instruction.

When the rank is 1, it is stipulated in the LTE standard that a correspondence between $i_1$ and a precoding matrix may be expressed as follows:

| $i_1$ | $i_2$ | | | | | | | |
|---|---|---|---|---|---|---|---|---|
| | 0 | 1 | | 3 | 4 | 5 | 6 | 7 |
| 0-15 | $W^{(1)}_{2i_1,0}$ | $W^{(1)}_{2i_1,1}$ | $W^{(1)}_{2i_1,2}$ | $W^{(1)}_{2i_1,3}$ | $W^{(1)}_{2i_1+1,0}$ | $W^{(1)}_{2i_1+1,1}$ | $W^{(1)}_{2i_1+1,2}$ | $W^{(1)}_{2i_1+1,3}$ |

(continued)

| $i_1$ | $i_2$ | | | | | | | |
|---|---|---|---|---|---|---|---|---|
| | 8 | 9 | 10 | 11 | 12 | 13 | 14 | 15 |
| 0-15 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |
| where | | | | | $W_{m,n}^{(1)} = \dfrac{1}{\sqrt{8}}\begin{bmatrix} v_m \\ \varphi_n v_m \end{bmatrix}$ | | | |

$\varphi_n = e^{j\pi n/2}$
where $v_m = [1 \; e^{j2\pi n/32} \; e^{j4\pi n/32} \; e^{j2\pi n/32}]$, and $i_1$ has 16 values, which correspond to 16 $W_1$.

$i_1$ may be restricted by means of codebook subset restriction, and the selection range of $W_1$ is restricted. For example, if a value range of $i_1$ is {0, 2, 4, 6, 8, 10, 12, 14}, there are eight groups of column vector sequence numbers {$2i_1,2i_1+1,2i_1+2,2i_1+3$} or the precoding matrices corresponding to $W_1$, and the eight groups of column vector sequence numbers are:{0,1,2,3},{4,5,6,7},{8,9,10,11},{12,13,14,15},{16,17,18,19},{20,21,22,23},{24,25,26,27}, and {28,29,30,21}. .

In the foregoing examples, the codebook subset restriction signaling may be carried by using a radio resource control (radio resource control, RRC for short) message or downlink control information (downlink control information, DCI for short).

It may be understood that, in the foregoing examples, the values of $W_2$, $i_2$, $W_1$, and $i_1$ that are indicated in the signaling sent by the base station 20 to the UE 10 are merely examples, but the present invention is not limited thereto. The base station 20 may select any subsets of the original value ranges of $W_2$, $i_2$, $W_1$, and $i_1$ from the stored codebook according to needs, and indicate the subsets to the UE 10.

In addition, the base station may further send a reference signal to the UE. The reference signal includes one or more of the following reference signals: a channel state information reference signal (channel state information reference signal, CSI RS for short), a demodulation reference signal (demodulation RS, DM RS for short), or a cell-specific reference signal (cell-specific RS, CRS for short).

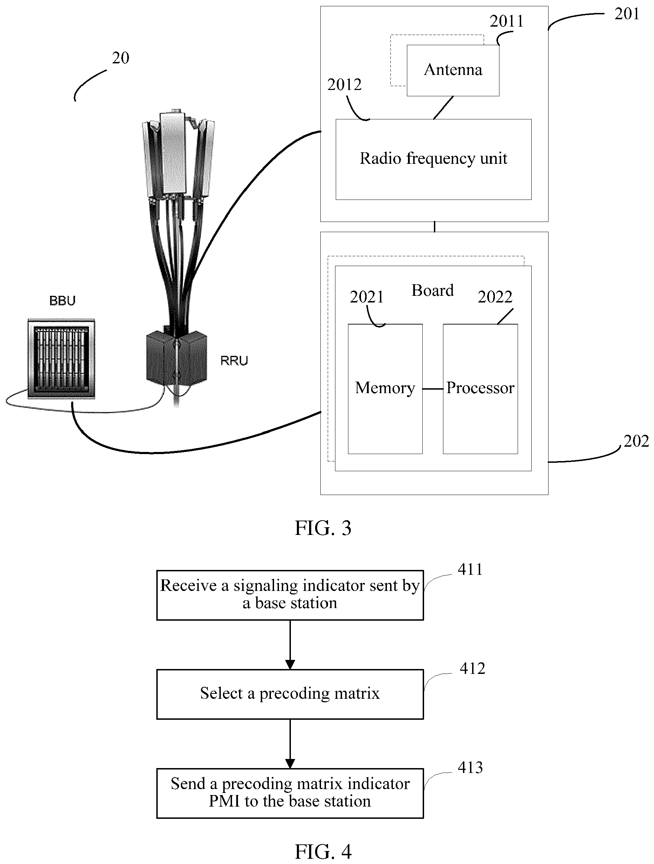

FIG. 3 is a schematic structural diagram of a base station. The base station may be applied to the system shown in FIG. 1. The base station 20 includes one or more remote radio units (English: remote radio unit, RRU for short) 201 and one or more baseband units (English: baseband unit, BBU for short) 202. The RRU 201 may be referred to as a transceiver unit, a transceiver machine, a transceiver circuit, a transceiver, or the like, and may include at least one antenna 2011 and a radio frequency unit 2012. The RRU 201 is configured to: receive and send a radio frequency signal, and convert the radio frequency signal and a baseband signal, for example, is configured to send the signaling indicator and/or the reference signal described in the foregoing embodiments to user equipment. The BBU 202 is mainly configured to perform baseband processing, control the base station, and the like. The RRU 201 and the BBU 202 may be physically disposed together, or may be physically separate, that is, a distributed base station.

The BBU 202 is a control center of the base station, is also referred to as a processing unit, and is configured to complete a baseband processing function, for example, channel coding, multiplexing, modulation, and spectrum spreading. For example, the BBU (the processing unit) may be configured to control the base station to execute a procedure shown in FIG. 2.

In an example, the BBU 202 may include one or more boards. Multiple boards may jointly support a radio access network (for example, an LTE network) of a single access standard, or may respectively support radio access networks of different access standards. The BBU 202 further includes a memory 2021 and a processor 2022. The memory 2021 is configured to store a necessary instruction and necessary data. For example, the memory 2021 stores the codebooks $C_1$ and $C_2$, and/or the codebook C in the foregoing embodiments. The processor 2022 is configured to control the base station to perform a necessary action, for example, is configured to control the base station to perform the action shown in FIG. 2, so as to select a precoding matrix set. The memory 2021 and the processor 2022 may serve one or more boards. That is, the memory and the processor may be disposed individually on each board. Alternatively, multiple boards may share the same memory and the same processor. In addition, a necessary circuit is disposed on each board.

FIG. 4 is a logic flowchart showing that UE receives precoding information from a base station.

At 411, the UE 10 receives a signaling indicator from the base station 20.

Specifically, the UE 10 receives the signaling indicator sent by the base station 20 shown in FIG. 3. The signaling indicator indicates a precoding matrix set selected by the base station 20. For details of the signaling indicator, refer to the related description in FIG. 3. Details are not described herein.

At 412, the UE 10 selects a precoding matrix. The UE 10 selects the precoding matrix according to the received signaling indicator. For example, the UE 10 may learn, according to the received signaling indicator, a precoding matrix set selected by the base station. The UE selects the precoding matrix from the precoding matrix set. For another example, the UE 10 and the base station 20 store a same codebook. The UE 10 receives the signaling indicator from the base station 20, and learns, according to the signaling indicator, a precoding matrix set selected by the base station. The precoding matrix set is a codebook subset of the codebook stored in the UE 10. The UE 10 selects the precoding matrix from the codebook subset in the stored codebook according to the signaling indicator.

How the UE specifically selects the precoding matrix is known by a person skilled in the art, and details are not described herein. For example, the UE 10 receives a reference signal from the base station 20, or the UE 10 obtains a resource configuration of a reference signal by receiving a notification (for example, an RRC message or downlink control information DCI) of the base station 20 or based on a cell identifier ID, and obtains the reference signal on a corresponding resource or subframe. The reference signal may include one or more of a CSI RS, a DM RS, or a CRS. The UE obtains channel estimation according to the reference signal, and selects, according to the channel estimation and a preset rule (for example, a channel capacity or throughput maximization criterion, or a chordal distance minimization criterion), the precoding matrix from the precoding matrix set indicated by the signaling indicator. How to select the precoding matrix is known by a person skilled in the art, and details are not described herein.

At 413, the UE 10 sends a precoding matrix indicator PMI to the base station 20.

The PMI corresponds to the precoding matrix selected at 412. The base station 20 receives the PMI sent by the UE, and may obtain the precoding matrix from a corresponding stored codebook according to the PMI.

In an example, the PMI sent by the UE is a PMI of a codebook subset obtained after codebook subset restriction, where the PMI obtained after codebook subset restriction refers to a PMI obtained after the precoding matrix obtained after codebook subset restriction is recoded. It is assumed that the codebook has eight precoding matrices, and a PMI of three bits is needed to indicate the eight precoding matrices. It is assumed that after subset restriction is performed on the codebook, the precoding matrix set has four precoding matrices. After the four precoding matrices are recoded, two bits are needed to indicate four statuses. Therefore, a quantity of feedback bits of the UE may be reduced.

For example, the PMI sent by the UE includes a first precoding matrix indicator $PMI_1$ and a second precoding matrix indicator $PMI_2$. The $PMI_1$ and the $PMI_2$ respectively correspond to $W_1$ and $W_2$. For example, the codebook subset obtained after codebook subset restriction may be: $\mathbf{Y} \in \left\{ \begin{bmatrix} 1 \\ 0 \\ 0 \\ 0 \end{bmatrix}, \begin{bmatrix} 0 \\ 0 \\ 1 \\ 0 \end{bmatrix} \right\}$ in $\mathbf{W}_2$ is restricted to being optional, and

$\varphi_n = e^{j\frac{2n\pi}{4}}, n = \{0,1\}$. That is, selection of $\mathbf{W}_2$ has four statuses, and for the second precoding matrix indicator $PMI_2$ obtained after codebook subset restriction, two-bit signaling is needed to represent the four statuses of $\mathbf{W}_2$.

In another example, the PMI may include one specific value. In this case, the PMI directly indicates a precoding matrix $\mathbf{W}$ obtained after codebook subset restriction. For example, if there are totally 256 different precoding matrices, and there are totally 128 precoding matrices obtained after codebook subset restriction, PMI = 0, ..., and 127 may be used to separately indicate the precoding matrix $\mathbf{W}$.

In still another example, the PMI may include a $PMI_1$ and a $PMI_2$, where the $PMI_1$ and the $PMI_2$ respectively correspond to $\mathbf{W}_1$ and $\mathbf{W}_2$ that are obtained after codebook subset restriction.

The $PMI_1$ and the $PMI_2$ have different time domain granularities or different frequency domain granularities, for example, the $PMI_1$ represent a broadband and the $PMI_2$ represent a subband. Another example, a $PMI_{11}$, a $PMI_{12}$, and the $PMI_2$ represent channel features of different periods or different bandwidths, or are obtained based on different subframe periods or different subband values. Further, the precoding matrix indicators $PMI_{11}$ and $PMI_{12}$ are sent to the base station at different time periods.

Further, the precoding matrix indicators PMI have different time domain granularities or different frequency domain granularities, or are obtained based on different subframe periods or different subband values.

That the UE sends a precoding matrix indicator PMI to the base station may be that the UE sends the precoding matrix indicator PMI to the base station by using a physical uplink control channel (physical uplink control channel, PUCCH for short) or a physical uplink shared channel (physical uplink shared channel, PUSCH for short).

It should be noted that the codeword (that is, the precoding matrix) W, $W_1$, or $W_2$ involved in this application may be a codeword in the stored codebook, or may be a precoding matrix obtained after row or column permutation.

For example, different antenna numbers correspondingly cause row permutation of the precoding matrix, and different layers correspondingly cause column permutation of the precoding matrix.

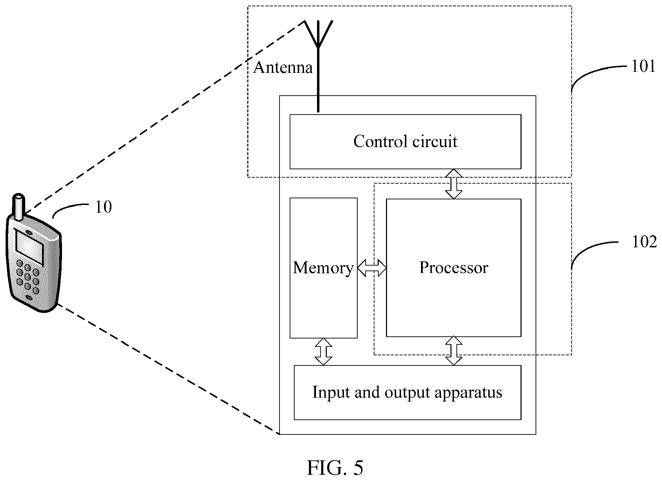

FIG. 5 is a schematic structural diagram of user equipment UE. The UE may be applicable to the system shown in FIG. 1. For ease of description, FIG. 5 shows main components of the user equipment. As shown in FIG. 5, the user equipment 100 includes: a processor, a memory, a control circuit, an antenna, and an input and output apparatus. The processor is mainly configured to: process a communications protocol and communication data, control the entire user equipment, execute a software program, and process data of the software program, for example, is configured to support the UE to execute an action described in FIG. 4. The memory is mainly configured to store the software program and data, for example, the codebook described in the foregoing embodiments. The control circuit is mainly configured to convert a baseband signal and a radio frequency signal, and process the radio frequency signal. The control circuit together with the antenna may also be referred to as a transceiver, mainly configured to receive and send a radio frequency signal of an electromagnetic wave form. For example, the transceiver may be configured to execute 411 in FIG. 4, that is, receive a signaling indicator and/or a reference signal sent by a base station. For another example, the transceiver may be configured to execute 413, that is, send a PMI to the base station. For details, refer to the descriptions about the foregoing related parts. The input and output apparatus, for example, a touchscreen, a display screen, or a keyboard, is mainly configured to receive data entered by a user and output data to the user.

After the user equipment is turned on, the processor may read the software program stored in a storage unit (such as a memory), explain and execute an instruction of the software program, and process the data of the software program. When data needs to be wirelessly sent, after performing baseband processing on the to-be-sent data, the processor outputs a baseband signal to a radio frequency circuit. After performing radio frequency processing on the baseband signal, the radio frequency circuit sends a radio frequency signal in a form of electromagnetic wave by using the antenna. When data is sent to the user equipment, the radio frequency circuit receives a radio frequency signal by using the antenna, converts the radio frequency signal into a baseband signal, and outputs the baseband signal to the processor. The processor converts the baseband signal into data, and processes the data.

A person skilled in the art may understand that, for ease of description, FIG.5 shows one memory and one processor. In actual user equipment, there may be multiple processors and multiple memories. The memory may also be referred to as a storage medium, a storage device, or the like. This is not limited in this embodiment of the present invention.

In an optional implementation manner, the processor may include a baseband processor and a central processing unit. The baseband processor is mainly configured to process the communications protocol and the communication data. The central processing unit is mainly configured to control the entire user equipment, execute the software program, and process the data of the software program. The processor in FIG. 5 integrates functions of the baseband processor and the central processing unit. A person skilled in the art may understand that the baseband processor and the central processing unit may be respectively independent processors, and are interconnected by using technologies such as a bus. A person skilled in the art may understand that the user equipment may include multiple baseband processors, to adapt to different network standards. The user equipment may include multiple central processing units, to enhance a processing capability of the user equipment. Components of the user equipment may be connected to each other by using various buses. The baseband processor may also be expressed as a baseband processing circuit or a baseband processing chip. The central processing unit may also be expressed as a central processing circuit or a central processing chip. A function of processing the communications protocol and the communication data may be set in the processor, or may be stored in the storage unit in a software program form. The processor executes the software program, to implement a baseband processing function.

For example, in this embodiment of the present invention, the antenna having a transceiving function, and the control circuit may be regarded as a transceiver unit 101 of the UE 10. The processor having a processing function may be regarded as a processing unit 102 of the UE 10. As shown in FIG. 5, the UE 10 includes the transceiver unit 101 and the processing unit 102. The transceiver unit may also be referred to as a transceiver, a transceiver machine, a transceiver apparatus, or the like. Optionally, a component configured to implement a receiving function in the transceiver unit 101 may be regarded as a receiving unit, and a component configured to implement a sending function in the transceiver unit 101 may be regarded as a sending unit. That is, the transceiver unit 101 includes the receiving unit and the sending unit. For example, the receiving unit may also be referred to as a receiving machine, a receiver, a receiving circuit, or the like. The sending unit may be referred to as a transmitting machine, a transmitter, a transmitting circuit, or the like.

A person skilled in the art may further understand that various illustrative logical blocks (illustrative logic block) and steps (step) that are listed in the embodiments of the present invention may be implemented by using electronic hardware, computer software, or a combination thereof. Whether the functions are implemented by using hardware or software depends on particular applications and a design requirement of the entire system. For each specific application, a person skilled in the art may implement the functions by using various methods, but it should not be considered that the implementation goes beyond the protection scope of the embodiments of the present invention.

Various illustrative logical units and circuits described in the embodiments of the present invention may implement or operate the described functions by using a general processor, a digital signal processor, an application-specific integrated circuit (ASIC), a field programmable gate array (FPGA) or another programmable logical apparatus, a discrete gate or transistor logic, a discrete hardware component, or any combination thereof. The general processor may be a microprocessor. Optionally, the general processor may be any traditional processor, controller, microcontroller, or state machine. The processor may also be implemented by a combination of computing apparatuses, such as a digital signal processor and a microprocessor, multiple microprocessors, one or more microprocessors and a digital signal processor core, or any other similar configuration.

Steps of the methods or algorithms described in the embodiments of the present invention may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor so that the processor may read information from the storage medium and write information to the storage medium. Alternatively, the storage medium may further be integrated into a processor. The processor and the storage medium may be disposed in an ASIC, and the ASIC may be disposed in UE. Optionally, the processor and the storage medium may be disposed in different components of the UE.

In one or more design examples, the functions described in the embodiments of the present invention may be implemented by using hardware, software, firmware, or any combination thereof. If the functions are implemented by software, the functions may be stored in a computer-readable medium, or may be transmitted on a computer-readable medium in a form of one or more instructions or program. The computer-readable medium includes a computer storage medium and a communications medium that enables a computer program to move from one place to another. The storage medium may be an available medium that may be accessed by any general or special computer. For example, such a computer-readable medium may include but is not limited to a RAM, a ROM, an EEPROM, a CD-ROM or another optical disc storage, a disk storage or another magnetic storage apparatus, or any other medium that may be used to bear or store program code, where the program code is in a form of an instruction or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disc and the disk include a compressed disk, a laser disk, an optical disc, a DVD, a floppy disk, and a Blu-ray disc. The disk generally copies data by a magnetic means, and the disc generally copies data optically by a laser means. The foregoing combination may also be included in the computer-readable medium.

According to the foregoing description of this specification in the present invention, technologies in the art may use or implement the content of the present invention. Any modification based on the disclosed content shall be considered obvious in the art. The basic principles described in the present invention may be applied to other variations without departing from the essence and scope of the present invention. Therefore, the content disclosed in the present invention is not limited to the described embodiments and designs and may also be extended to a maximum scope that is consistent with the principles and disclosed new features of the present invention.

**Claims**

1. A method for sending precoding information, comprising:

   generating, by a base station, a signaling indicator, wherein the signaling indicator is used to indicate one or more pieces of the following information:

   (i) a subset of codewords $W_2$ for a precoding matrix set based on a codebook structure $W=W_1 \cdot W_2$;
   (ii) value(s) of a second precoding matrix indicator $i_2$ for a precoding matrix set based on a codebook structure $W=W_1 \cdot W_2$, where each value of $i_2$ is used to indicate a codeword $W_2$;
   (iii) a subset of codewords $W_1$ for a precoding matrix set based on a codebook structure $W=W_1 \cdot W_2$;
   (iv) value(s) of a first precoding matrix indicator $i_1$ for a precoding matrix set based on a codebook structure $W=W_1 \cdot W_2$, where each value of $i_1$ is used to indicate a codeword $W_1$; and

   sending, by the base station, the signaling indicator to user equipment, UE.

2. The method according to claim 1, wherein the subset of the codewords $W_2$ comprises one of the following sets: a codeword $W_2$ whose column selection vector value is restricted, a codeword $W_2$ whose phase rotation weighting factor value is restricted, or a codeword $W_2$ whose column selection vector value and phase rotation weighting factor value are both restricted.

3. The method according to claim 1 or 2, wherein the signaling indicator is codebook subset restriction signaling.

4. The method according to any one of claims 1 to 3, wherein the signaling indicator is carried in a radio resource control (RRC) message or downlink control information (DCI) sent by the base station to the UE.

5. The method according to any one of claims 1 to 4, wherein the codewords $W_1$ and $W_2$ are codewords in a codebook stored in the base station, or precoding matrices obtained after row or column permutation is performed on a codeword in a codebook stored in the base station.

6. The method according to any one of claims 1 to 5, wherein $W_2$ corresponds to a subband or a short-term channel feature.

7. The method according to any one of claims 1 to 6, wherein $W_1$ corresponds to a broadband or a long-term channel feature.

8. A base station, comprising:

a processor, configured to generate a signaling indicator, wherein the signaling indicator is used to indicate one or more pieces of the following information:

(i) a subset of codewords $W_2$ for a precoding matrix set based on a codebook structure $W=W_1 \cdot W_2$;
(ii) value(s) of a second precoding matrix indicator $i_2$ for a precoding matrix set based on a codebook structure $W=W_1 \cdot W_2$, where each value of $i_2$ is used to indicate a codeword $W_2$;
(iii) a subset of codewords $W_1$ for a precoding matrix set based on a codebook structure $W=W_1 \cdot W_2$;
(iv) value(s) of a first precoding matrix indicator $i_1$ for a precoding matrix set based on a codebook structure $W=W_1 \cdot W_2$, where each value of $i_1$ is used to indicate a codeword $W_1$; and

a transceiver, configured to send the signaling indicator to user equipment UE.

9. The base station according to claim 8, wherein the subset of the codewords $W_2$ comprises one of the following sets: a codeword $W_2$ whose column selection vector value is restricted, a codeword $W_2$ whose phase rotation weighting factor value is restricted, or a codeword $W_2$ whose column selection vector value and phase rotation weighting factor value are both restricted.

10. The base station according to claim 8 or 9, further comprising a memory, configured to store a codebook, wherein the codebook comprises at least one codeword W, and a codeword structure of W is $W=W_1 \cdot W_2$.

11. The base station according to claim 8 or 9, further comprising a memory, configured to store a codebook, wherein the codewords $W_1$ and $W_2$ are codewords in the codebook stored in the memory, or precoding matrices obtained after row or column permutation based on a codeword in the codebook stored in the memory.

12. The base station according to any one of claims 8 to 11, wherein the transceiver is configured to send a radio resource control RRC message or downlink control information DCI to the UE, and the RRC message or the DCI carries the signaling indicator.

13. The base station according to any one of claims 8 to 12, wherein the transceiver is further configured to receive a precoding matrix indicator (PMI) from the UE, and a precoding matrix indicated by the PMI belongs to the precoding matrix set.

14. A method for feeding back precoding information, comprising:

receiving, by user equipment UE, a signaling indicator from a base station, wherein the signaling indicator is used to indicate one or more pieces of the following information:

(i) a subset of codewords $W_2$ for a precoding matrix set based on a codebook structure $W=W_1 \cdot W_2$;
(ii) value(s) of a second precoding matrix indicator $i_2$ for a precoding matrix set based on a codebook

structure $W=W_1 \cdot W_2$, where each value of $i_2$ is used to indicate a codeword $W_2$;
(iii) a subset of codewords $W_1$ for a precoding matrix set based on a codebook structure $W=W_1 \cdot W_2$;
(iv) value(s) of a first precoding matrix indicator $i_1$ for a precoding matrix set based on a codebook structure $W=W_1 \cdot W_2$, where each value of $i_1$ is used to indicate a codeword $W_1$;

selecting, by the UE, a precoding matrix according to the signaling indicator, wherein the selected precoding matrix belongs to the precoding matrix set; and
sending, by the UE, a precoding matrix indicator (PMI) to the base station.

15. The method according to claim 14, wherein the subset of the codewords $W_2$ comprises one of the following sets: a codeword $W_2$ whose column selection vector value is restricted, a codeword $W_2$ whose phase rotation weighting factor value is restricted, or a codeword $W_2$ whose column selection vector value and phase rotation weighting factor value are both restricted.

16. The method according to claim 14 or 15, wherein the UE receives a radio resource control, RRC, message or downlink control information, DCI, that carries the signaling indicator.

17. The method according to any one of claims 14 to 16, wherein the PMI sent by the UE to the base station comprises a first precoding matrix indicator $PMI_1$ and a second precoding matrix indicator $PMI_2$, the $PMI_1$ is used to indicate the codeword $W_1$, and the $PMI_2$ is used to indicate the codeword $W_2$; or
the PMI sent by the UE to the base station is a PMI of the precoding matrix selected by the UE; or
the PMI sent by the UE to the base station is a PMI that is obtained after the UE recodes the precoding matrix set and that is for the selected precoding matrix.

18. The method according to claim 17, wherein the precoding matrix indicators $PMI_1$ and $PMI_2$ have different time domain granularities or different frequency domain granularities.

19. User equipment UE, comprising:

a transceiver, configured to receive a signaling indicator from a base station, wherein the signaling indicator is used to indicate one or more pieces of the following information:

(i) a subset of codewords $W_2$ for a precoding matrix set based on a codebook structure $W=W_1 \cdot W_2$;
(ii) value(s) of a second precoding matrix indicator $i_2$ for a precoding matrix set based on a codebook structure $W=W_1 \cdot W_2$, where each value of $i_2$ is used to indicate a codeword $W_2$;
(iii) a subset of codewords $W_1$ for a precoding matrix set based on a codebook structure $W=W_1 \cdot W_2$;
(iv) value(s) of a first precoding matrix indicator $i_1$ for a precoding matrix set based on a

codebook structure $W=W_1 \cdot W_2$, where each value of $i_1$ is used to indicate a codeword $W_1$; and
a processor, configured to select a precoding matrix according to the signaling indicator, wherein the selected precoding matrix belongs to the precoding matrix set, wherein
the transceiver is further configured to send a precoding matrix indicator (PMI) to the base station.

20. The UE according to claim 19, wherein the subset of the codewords $W_2$ comprises one of the following sets: a codeword $W_2$ whose column selection vector value is restricted, a codeword $W_2$ whose phase rotation weighting factor value is restricted, or a codeword $W_2$ whose column selection vector value and phase rotation weighting factor value are both restricted.

21. The UE according to claim 19 or 20, wherein the precoding matrix indicator (PMI) that the transceiver is configured to send to the base station comprises:

a first precoding matrix indicator $PMI_1$ and a second precoding matrix indicator $PMI_2$, wherein the $PMI_1$ is used to indicate the codeword $W_1$, and the $PMI_2$ is used to indicate the codeword $W_2$; or
the PMI is a PMI of the precoding matrix selected by the UE; or
the PMI is a PMI that is obtained after the UE recodes the precoding matrix set and that is used to indicate the selected precoding matrix.

22. The base station according to claim 21, the precoding matrix indicators PMI1 and PMI2 have different time domain granularities or different frequency domain granularities.

Radio access
network RAN

20

Base
station
BS

∴

10

Core network CN

External network
External Network

FIG. 1

Generate a signaling indicator
211

Send the signaling indicator
212

FIG. 2

FIG. 3

FIG. 4

FIG. 5

# INTERNATIONAL SEARCH REPORT

| International application No. |
| --- |
| **PCT/CN2015/087948** |

### A. CLASSIFICATION OF SUBJECT MATTER

H04B 7/04 (2006.01) i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT, WPI, EPODOC: codebook, pmi, double codebook, ID, set+, uplink, code, matrix, pre-cod+, code word, subset, double code, vector, signal, signature, instruction, identifier, factor

### C. DOCUMENTS CONSIDERED TO BE RELEVANT

| Category* | Citation of document, with indication, where appropriate, of the relevant passages | Relevant to claim No. |
| --- | --- | --- |
| Y | CN 101667857 A (BEIJING T3G TECHNOLOGY CO., LTD.), 10 March 2010 (10.03.2010), description, page 5, line 17 to page 9, line 18 | 1-22 |
| Y | CN 102404084 A (ALCATEL-LUCENT SHANGHAI BELL CO., LTD.), 04 April 2012 (04.04.2012), description, paragraphs [0005]-[0021] and [0024]-[0083] | 1-22 |
| Y | CN 102938687 A (HUAWEI TECHNOLOGIES CO., LTD.), 20 February 2013 (20.02.2013), description, paragraphs [0034]-[0212] | 1-22 |
| A | US 2014177745 A1 (MOTOROLA MOBILITY LLC.), 26 June 2014 (26.06.2014), the whole document | 1-22 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 April 2016 (05.04.2016) | **13 May 2016 (13.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xinyue** Telephone No.: (86-10) **82245268** |
| --- | --- |

Form PCT/ISA/210 (second sheet) (July 2009)

## INTERNATIONAL SEARCH REPORT
### Information on patent family members

| International application No. |
| --- |
| **PCT/CN2015/087948** |

| Patent Documents referred in the Report | Publication Date | Patent Family | Publication Date |
| --- | --- | --- | --- |
| CN 101667857 A | 10 March 2010 | None | |
| CN 102404084 A | 04 April 2012 | EP 2617147 A1 | 24 July 2013 |
| | | US 2013170578 A1 | 04 July 2013 |
| | | TW 201215012 A | 01 April 2012 |
| | | WO 2012035425 A1 | 22 March 2012 |
| CN 102938687 A | 20 February 2013 | WO 2013023586 A1 | 21 February 2013 |
| US 2014177745 A1 | 26 June 2014 | CN 105264787 A | 20 January 2016 |
| | | EP 2936701 A1 | 28 October 2015 |
| | | KR 20150097774 A | 26 August 2015 |
| | | WO 2014099341 A1 | 26 June 2014 |

Form PCT/ISA/210 (patent family annex) (July 2009)